# EUROPEAN PATENT APPLICATION

(11) **EP 2 077 066 A1**
(43) Date of publication of application: **08.07.2009**
(21) Application number: 08253995.8
(22) Date of filing: 12.12.2008
(51) Int. Cl.: A01D 34/416

(54) **String trimmer head**

(30) Priority: 03.01.2008 US 969142
(71) Applicant: Techtronic Industries Company Limited, Tsuen Wan New Territories Hong Kong (CN)
(72) Inventor: Morris, John F., Anderson, SC 29625 (US); Reynolds, Marion W., Anderson, SC 29621 (US); Brower, David R., Townville, SC 29689 (US); Wiggins, John W., Williamston, SC 29697 (US); Lollis, Matthew S., Anderson, SC 29626 (US); Eakins, Charles A., Jr., Liberty, SC 29657 (US)
(74) Representative: Martin, David John

(57) **Abstract**

An improved string trimmer head is described. The trimmer head (18) comprises a housing (20) with a spool (28) and spring (30) assembly enclosed within the housing. The trimmer head further comprises a lid (24) connected to the housing and a bump knob (26) with a base (32) and an intermediate member (34). The base of the bump knob is located inside the housing. The intermediate member extends outside the housing through the lid. The lid comprises an annulus (54) which surrounds the base. The height of the annulus is greater than a maximum compressing distance (58) of the spool when compressed by the bump knob. A segment of the intermediate member remains outside the lid when the spool is compressed. The bump knob further comprises a finger slot (36) with an outer edge (40) and a recessed portion (38). A bottom side (68) of the outer edge is positioned farther away from the spool than the recessed portion.

## Description

### BACKGROUND

Weed and grass string trimmers have been available and in use for years. These string trimmers are particularly desirable for trimming along fences. buildings and other areas that are generally inaccessible by regular lawn mowers. Additionally, string trimmers can be used to trim sidewalk and driveway borders or small lawn areas.

String trimmers employ a flexible line that allows the trimmer to impact walls and shrubs with minimal or no damage, as opposed to a rigid, metal blade. Additionally. the flexible line can be far safer to use than the rigid cutting blade.

One common type of string trimmer uses a rotatable string trimmer head comprising a housing with a short length of flexible plastic or nylon line that extends from the housing. The string trimmer head is attached to a motor shaft operated by a small gasoline engine or electric motor. The motor shaft can rotate at high speeds, upwards of 6,000 RPM to 12,000 RPM. At these high speeds, the plastic or nylon line serves as a cutting blade to cut grass, weeds or other vegetation.

Through use of the string trimmer, the plastic or nylon line wears down and breaks, requiring replacement of the line. Many string trimmers employ a "bump and feed" mechanism that replaces the used or broken line while the string trimmer is in operation. The mechanism has the line wrapped around a spool located within the housing. The spool feeds the line out of at least one eyelet in the housing. As the line wears down and breaks off, the bottom of the string trimmer head is bumped on the ground to cause a spring release of the line within the string trimmer head housing. The line extends out a short length through an eyelet by means of centrifugal force when the trimmer head is rotating.

A problem exists with such "bump and feed" trimmers, as debris collects inside the trimmer head when the bottom of the trimmer head is bumped. Debris, such as dirt and vegetation pieces, causes the trimmer head to become inoperable over a period of time. Prior designs have not been successful in preventing debris, as bump and feed string trimmers must be frequently stopped for cleaning and maintenance. Thus, there is a need for a bump and feed trimmer that reduces or eliminates debris from collecting in the interior of the trimmer head.

### BRIEF SUMMARY

The systems and methods of the present invention are directed to providing solutions for reducing or eliminating debris from collecting in the interior of the string trimmer head. Details and advantages are described below in the detailed description.

Embodiments may include any of the following aspects in various combinations and may also include any other aspect described below in the written description or in the attached drawings.

In one aspect the invention provides a string trimmer head comprising a cylindrical housing having top and bottom ends, a spool enclosed within the housing, the spool being movable a maximum compressing distance between an operating position and a compressed position, a spring operatively connected with the spool, a lid connected to the bottom end of the housing, the lid comprising an outer surface, and a bump knob comprising a base and an intermediate member, wherein the intermediate member comprises top and bottom sides, wherein the base is located inside the housing and the bottom side of the intermediate member extends outside the housing through the lid, and wherein the bottom side of the intermediate member maintains a distance farther away from the spool than the outer surface of the lid during operation and compression of the string trimmer head.

The intermediate member preferably comprises an external segment that is outside the housing when the string trimmer head is in the operating position, the external segment having a height that is greater than the maximum compressing distance. The lid comprises an annular surrounding the base, the annulus having a height which is greater than the maximum compressing distance. The bump knob further comprises at least one finger slot positioned outside the housing on an outer circumference of the bump knob, the finger slot comprising an outer edge and a recessed portion, wherein the outer edge is positioned at a distance farther away from the spool than the recessed portion of the finger slot. At least one gap is formed between (1) the lid and the intermediate member or (2) the annulus and the base is 0.2 mm or less.

In another aspect the invention resides in a string trimmer head comprising a cylindrical housing comprising top and bottom ends, a spool enclosed within the housing, the spool being movable a maximum compressing distance between an operating position and a compressed position, a spring operatively connected with the spool, a lid connected to the bottom end of the housing, and a bump knob comprising a base, wherein the base is located inside the housing in both the operating and compressed positions, wherein the lid comprises an annulus surrounding the base, the annulus having a height which is greater than the maximum compressing distance.

In another aspect the invention resides in a string trimmer head comprising a cylindrical housing having top and bottom ends, a spool enclosed within the housing, a spring operatively connected with the spool, a lid connected to the bottom end of the housing, the lid comprising an outer surface, and a bump knob comprising at feast one finger slot positioned outside the housing on an outer circumference of the bump knob, the finger slot comprising an outer edge and a recessed portion, wherein the outer edge has a bottom side that is positioned at a distance farther away from the spool than the recessed portion of the finger slot.

In another aspect the invention resides in a string trimmer head comprising a cylindrical housing having top and bottom ends, a spool enclosed within the housing, the spool being movable a maximum compressing distance between an operating position and a compressed position, a spring operatively connected with the spool, a lid connected to the bottom end of the housing, the lid comprising an outer surface, and a bump knob comprising a base and an intermediate member, wherein the base is located inside the housing and the intermediate member extends outside the housing through the lid in both the operating and compressed positions, wherein the intermediate member comprises an external segment that is outside the housing when the string trimmer head is in the operating position, the external segment having a height that is greater than the maximum compressing distance, wherein the lid comprises an annulus which surrounds the base of the bump knob, the annulus having a height which is greater than the maximum compressing distance, and wherein the bump knob further comprises at least one finger slot positioned outside the housing on an outer circumference of the bump knob, the finger slot comprising an outer edge and a recessed portion, wherein the outer edge is positioned at a radial distance farther away from a central axis of the spool than the recessed portion, and wherein the outer edge comprises a bottom side, the bottom side of the outer edge positioned at a distance farther away from the spool than the recessed portion in both the operating and compressed positions.

In another aspect the invention resides in a method of preventing debris from entering a housing of a string trimmer head, the method comprising operating a string trimmer with the string trimmer head in an operating position, the string trimmer head comprising the housing having top and bottom ends, a spool enclosed within the housing, the spool being movable a maximum compressing distance between the operating position and a compressed position, a spring operatively connected with the spool, a lid connected to the bottom end of the housing, the lid comprising an outer surface, and a bump knob comprising a base and an intermediate member, wherein the base is located inside the housing, and wherein the intermediate member comprises top and bottom sides, wherein the bottom side extends outside the housing through the lid, pressing the bump knob against a surface, thereby moving the bump knob and the spool into the compressed position, and wherein the bottom side of the intermediate member maintains a distance farther away from the spool than the outer surface of the lid.

### BRIEF DESCRIPTION OF SEVERAL VIEWS OF THE DRAWINGS

Embodiments of the invention are now described, by way of example only, with reference to the following drawings in which:
Figure 1 is an embodiment of the string trimmer head, assembled;
Figure 2 is an embodiment of the string trimmer head, disassembled into its various components, including a bump knob, lid, spool spring, housing and eyelets.
Figure 3 is a cross-section of an embodiment of the string trimmer head, the trimmer head in an operating position;
Figure 4 is a closer view of a specific section of the embodiment in Figure 3;
Figure 5 is a cross-section of an embodiment of the string trimmer head, the trimmer head in a compressed position;
Figure 6 is a closer view of a specific section of the embodiment in Figure 5; and

### DETAILED DESCRIPTION

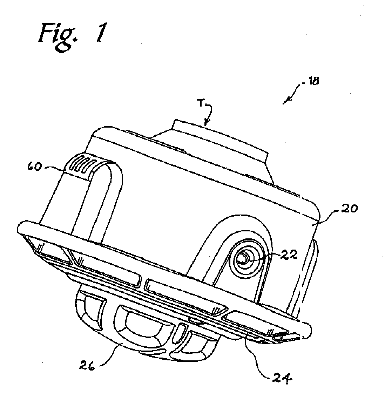

Referring now to the drawings, Figure 1 displays one embodiment of an assembled string trimmer head 18. In this embodiment, a bump knob 26 is located on the bottom of the assembly, closest to the ground. A lid 24 secures the bump knob 26 in place. A housing 20 is connected to the lid 24 through at least one latch 60. The housing 20 includes at least one eyelet 22 in which a flexible plastic or nylon line extends out of the housing 20. A shaft extends from the top end (T) of the housing 20, opposite the bump knob 26. A small two-stroke gas engine or electric motor is typically connected at the other end of the shaft, opposite the string trimmer head 18. The trimmer head can rotate at high speeds, upwards of 6,000 RPM to 12,000 RPM. At these high speeds, the plastic or nylon line serves as a cutting blade to cut grass, weeds or other vegetation.

As the plastic or nylon line becomes worn and breaks, the line is replaced by "bumping" the bump knob 26 on the ground during operation of the string trimmer. The string trimmer head has the line wrapped around a spool located within the housing 20. The spool feeds the line out of at least one eyelet 22 in the housing 20. Bumping the bump knob 26 compresses a spring and rotates the spool within the housing 20, causing a release of the line out of the housing 20 through the eyelet 22.

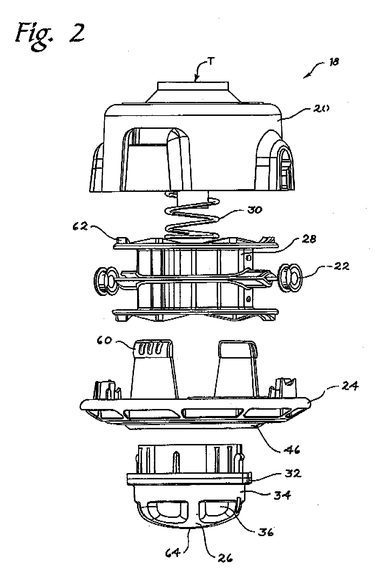

Figure 2 displays the embodiment in Figure 1, with the various elements of the string trimmer head 18 separated from each other. In this figure, both internal and external elements are displayed. At one end of the string trimmer head 18 is the bump knob 26. The bump knob 26 comprises at least one finger slot 36 to grip the bump knob 26. Each finger slot 36 contains a recessed portion and an outer edge (discussed below in greater detail). The bump knob 26 also contains an intermediate member 34 and a base 32. The intermediate member 34 comprises the section of the bump knob 26 between the base 32 and the finger slot 36. The base 32 comprises the section of the bump knob 26 that is located within the housing 20 with the base 32 secured in place by the lid 24. The lid 24 is connected to the housing 20 through at least one latch 60. The lid 24 also secures in place a spool 28 and spring 30 assembly within the housing 20.

The base 32 also touches or abuts the spool 28 located within the housing 20. The spool 28 feeds the cutting line out of the housing 20 through at least one eyelet 22. Feeding the line through the eyelet 22 is accomplished during operation of the string trimmer head 18. By pressing the bump knob 26 on the ground, the base 32 of the bump knob 26 pushes the spool 28 away from the lid 24, compressing the spring 30 inside the housing 20. This defines a compressed position of the string trimmer head 18. Compressing the bump knob allows for the line to be extended out of the housing 20 through the eyelet 22. When the bump knob 26 is released, the spring 30 pushes the spool 28 and bump knob 26 back to an operating position.

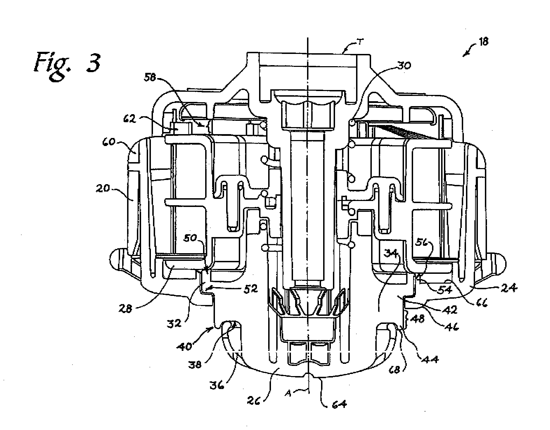

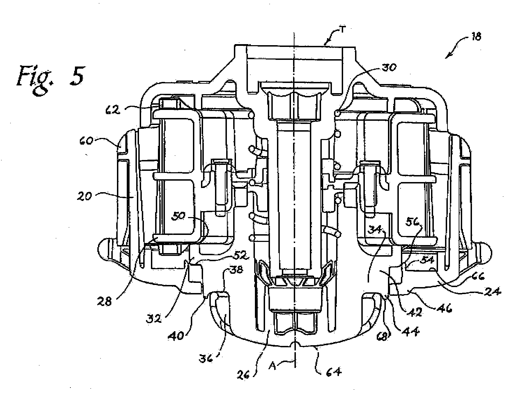

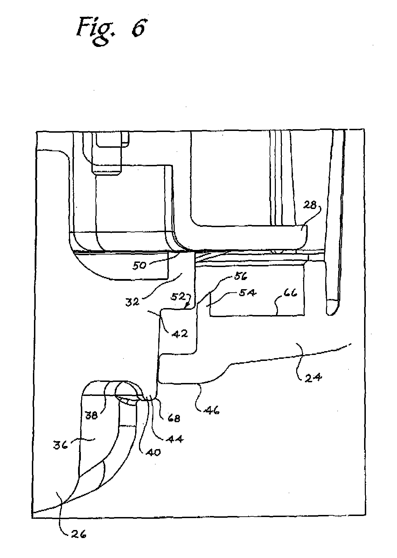

Figure 3 displays a cross-section of one embodiment of the string trimmer head 18 in an operating position. The operating position refers to when the bump knob 26 is extended fully. The operating position is generally the position used when trimming. The bump knob 26 also has a compressed position (shown in Figures 5 and 6) which is achieved when the bump knob 26 is pressed to release more cutting line. When the bump knob is released from the compressed position, the spring 30 inside the housing 20 pushes the spool 28 and bump knob 26 outward and the string trimmer head 18 returns to the operating position.

In Figure 3, a cross-section of the string trimmer head 18 is shown with the trimmer head rotating around a central axis (A). The bump knob 26, displayed closest to the ground, includes at least one finger slot 36. In this embodiment, each finger slot 36 includes an outer edge 40 and a recessed portion 38. The outer edge 40, having a bottom side 68 extends outward from the spool 28 and housing 20. When measuring in a line parallel to the central axis (A) of the spool 28, the recessed portion 38 of the finger slot 36 is located at a distance closer to the spool 28 than the bottom side 68 outer edge 40. Further, when measuring in a line extending radially outward from and perpendicular to the central axis (A), the recessed portion 38 is located at a distance closer to the central axis (A) than the outer edge 40. Additionally, when the bump knob 26 and spool 28 move into a compressed position, the bottom side 68 of the outer edge 40 remains outside the outer surface 46 of the lid 24.

This embodiment serves multiple purposes. One purpose of the finger slot 36 is to decrease or eliminate the amount of debris that may collect within the housing 20 during operation of the string trimmer head 18. By creating a finger slot 36 with an outer edge 40 and a recessed portion 38, the outer edge forms a barrier near the gap between the lid 24 and bump knob 26. The barrier is formed while the string trimmer head is in both the operating and compressed positions. Debris created within the perimeter of the bump knob 26 is directed into the recessed portion 38 of the finger slot 36 by the outer edge barrier. This barrier reduces the amount of debris that can filter into the internal components of the housing 20, causing delays in operation for maintenance.

Another purpose of the finger slot 36 is to provide a grip for rotating the bump knob 26 manually. Having a recessed portion 38 in the finger slot 36 allows for a full grip to exist beginning at a point closer to the housing 20, thereby minimizing the distance between the distal end 64 of the bump knob 26 and the lid 24. In other words, if the same sized finger slot existed without a recessed portion 38, the bump knob 26 would be larger in height. A larger sized bump knob would extend farther away from the housing 20 and lid 24, potentially affecting operation of the string trimmer. As will be seen in the other embodiments (described below), there is a potential need to limit any increased size of the bump head. The recessed portion 3 8 in the finger slot 36 accomplishes this task.

Adjacent to the finger slot 36 is the intermediate member 34 of the bump knob 26. The intermediate member 34 is located between the finger slot 36 and the base 32 of the bump knob 26. The base 32 is located inside the housing 20, between the spool 28 and the outer surface 46 of the lid 24. The intermediate member 34 extends out of the housing 20 through the opening in the center of the lid 24. The lid 24 surrounds the intermediate member 34, creating a small gap. The gap preferably can range from <0.1 to 0.2 mm. Most preferably, the gap between the intermediate member 34 and lid 24 is 0.1 mm or less. The intermediate member 34 contains a top side 42 and a bottom side 44. The top side 42 of the intermediate member 34 is connected or transitions to the base 32 of the bump knob 26. The bottom side 44 of the intermediate member 34 is connected or transitions to the finger slot 36. In the embodiment in Figure 3, the bottom side 44 of the intermediate member 34 merges with the outer edge 40 of the finger slot 36.

When the string trimmer head 18 moves from an operating position to a compressed position by pressing the bump knob 26 against the ground, a maximum compressing distance 58 can be achieved. The spool 28 and bump knob 26 can move a maximum compressing distance 58 before the spool 28 is stopped by a portion of the housing 20. In this embodiment, the intermediate member 34 comprises an external segment 48 when the string trimmer head 18 is in an operating position. The external segment 48 of the intermediate member 34 has a height that is greater than the maximum compressing distance 58.

Alternatively described, the intermediate member 34 is designed to have a portion of the intermediate member 34 remain outside the housing 20 and the outer surface 46 of the lid 24 when the string trimmer head 18 is in either the operating or compressed position. When measuring in a line parallel to the central axis (A), the bottom side 44 of the intermediate member remains at a distance farther from the spool 28 than the outer surface 46 of the lid 24.

This embodiment helps reduce and potentially eliminate debris from entering the housing 20. By having an intermediate member 34 of a certain height, any opening into the trimmer head is minimized by a "wall" that is always present to prevent debris from flooding into the housing 20, regardless of whether the string trimmer head 18 is in an operating or a compressed position.

Figure 3 displays another embodiment in addition to the intermediate member and finger slot embodiments. Debris is also reduced or eliminated through the design of the base 32 of the bump knob 26. The base 32 of the bump knob 26 comprises a top side 50 and a bottom side 52. The top side 50 of the base 32 abuts the spool 28. The bottom side 52 rests against the inner surface 66 of the lid 24 when the string trimmer head 18 is in an operating position. When the bump knob 26 is pressed against the ground, the top side 50 of the base 32 presses against the spool 28, moving the spool 28 a maximum compressing distance 58 into the compressed position. An annulus 54 is located on the inner surface 66 of the lid 24. The annulus 54 surrounds the base 32 of the bump knob 26, with only a small gap formed between the annulus 54 and base 32. The gap preferably can range from <0.1 to 0.2 mm. Most preferably, the gap between the annulus 54 and base 32 is 0.1 mm or less.

When the string trimmer head 18 is in an operating position, the bottom side 52 of the base 32 is in a position farther away from the spool 28 than a top edge 56 of the annulus 54. When the string trimmer head 18 moves into a compressed position, the bottom side 52 of the base 32 remains in a position farther away from the spoof 28 than the top edge 56 of the annulus 54. Alternatively described, the height of the base 32 (measured from the top side 50 to the bottom side 52) is greater than the maximum compressing distance 58.

This embodiment helps reduce and potentially eliminate debris from entering the housing 20. By having a base 32 of a certain height, any opening into the trimmer head is minimized by a "wall" that is always present to prevent debris from filtering into the housing 20, regardless of whether the string trimmer head 18 is in an operating or compressed position.

As shown in Figures 3-6, the top edge 56 of the annulus 54 can be inclined relative to the ground. Should the bump knob become off-centered during compression, this embodiment allows the bump knob 26 to be easily directed back to the operating position. Other embodiments may also be acceptable, such as an annulus 54 with a cornered, curved, or rounded end.

Preferably, the base embodiment is combined with the intermediate member embodiment and the finger slot embodiment. Through a combination of these three embodiments, the amount of debris entering the housing 20 can be reduced or eliminated. Additionally, the amount of debris can also be reduced by decreasing the size of the gap between the intermediate member 34 of the bump knob 26 and the lid 24. The size of the gap can preferably ranges from <0.1 to 0.2 mm. Most preferably, the gap should be 0.1 mm or less. Additionally, the amount of debris can be further reduced by decreasing the gap size between the base 32 of the bump knob 26 and the annulus 54 of the lid 24. The size of this gap preferably ranges from <0.1 to 0.2 mm. Most preferably, this gap should be 0.1 mm or less.

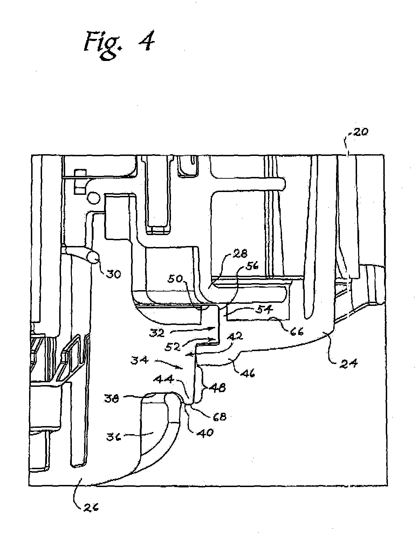

Figure 4 displays a closer view of the embodiments discussed in Figure 3. The bump knob 26 is located at the bottom, closest to the ground. At least one finger slot 36 is located on the bump knob 26. The finger slot 36 includes a recessed portion 38 and an outer edge 40. The recessed portion 38 and outer edge 40 are designed to limit debris from entering the housing 20. The outer edge 40 acts to catch debris and keep it from entering the housing. Additionally, the recessed portion 38 provides a full finger grip to exist with the grip at a position closer to the housing 20 and spool 28. Since the size of the intermediate member 34 and base 32 of the bump knob 26 have potentially larger heights, the recessed portion 38 of the finger slot 36 limits any increase in height of the overall bump knob 26.

With regard to the intermediate member 34 of the bump knob 26, Figure 4 displays the top side 42 and bottom side 44 of the intermediate member 34. Additionally, a better view of the external segment 48 of the intermediate member 34 is shown. The height of the external segment 48 extends from the outer surface 46 of the lid 24 to the outer edge 40 of the finger slot 36. In this embodiment, the height of the external segment 48 is greater than the maximum compressing distance 58 (shown in Figure 3). Alternatively described, when measuring in a line parallel to the central axis (A), the bottom side 44 of the intermediate member 34 remains in a position farther away from the spool 28 than the outer surface 46 of the lid 24. Basically, the bottom side 44 of the intermediate member 34 remains outside of the lid 24 to create a constant barrier from debris entering the housing 20, regardless of whether the string trimmer head 18 is in a compressed or an operating position.

Regarding the base 32 of the bump knob 26, Figure 4 displays a closer view of the top side 50 and the bottom side 52 of the base 32 as well. Also shown is the annulus 54 of the lid 24. In this embodiment, when the spool 28 and bump knob 26 move into the compressed position, the bottom side 52 of the base 32 remains in a position farther away from the spool 28 than the top edge 56 of the annulus 54. Alternatively described, the height of the base 32 (measured from the top side 50 to the bottom side 52 of the base 32) is greater than the maximum compressing distance 58 (shown in Figure 3).

Figures 5 and 6 display the compressed position of the string trimmer head embodiments discussed in Figures 3 and 4. Figure 6 displays a closer view of several of the elements displayed in Figure 5. The bump knob 26 has been pressed against the ground, pushing the spool 28 upward and compressing the spring 30. When measuring in a line parallel to the central axis (A), the bottom side 68 of the outer edge 40 of the finger slot 36 remains in a position farther away from the spool 28 and housing 20 than the outer surface 46 of the lid 24, preventing debris from entering the housing 20. The finger slot 36 is also designed to allow debris to collect in the recessed portion 38, and thus keep debris away from the gap between the bump knob 26 and lid 24.

Additionally, when the string trimmer head 18 is in a compressed position, the intermediate member 34 of the bump knob 26 has a bottom side 44 that is farther away from the spool 28 than the outer surface 46 of the lid 24. Alternatively described, the external segment 48 of the intermediate member 34 (shown in Figures 3 and 4, measured from the outer surface 46 of the lid 24 to the bottom side 44 of the intermediate member 34) is greater than the maximum compressing distance 58 (shown in Figure 3). This embodiment prevents debris from entering the housing 20 whether the string trimmer head 18 is in an operating or compressed position.

The base 32 of the bump knob 26 has a top side 50 and a bottom side 52 shown in Figures 5 and 6. When the string trimmer head 18 is in a compressed position, the bottom side 52 of the base 32 remains in a position farther away from the spool 28 than the top edge 56 of the annulus 54. In other words, the height of the base 32 (measured from the top side 50 to the bottom side 52) is greater than the maximum compressing distance 58 (shown in Figure 3). The base embodiment also prevents debris from entering the housing 20, in addition to the finger slot and intermediate member embodiments. When combined, these three embodiments become a preferred embodiment, further reducing the opportunity for debris to enter the housing 20 of the string trimmer head 18.

As previously discussed, it is also important to limit the gaps between: (1) the intermediate member 34 of the bump knob 26 and lid 24 and (2) the base 32 of the bump knob 26 and the annulus 54 of the lid 24. In the embodiments shown in Figures 3-6, both gaps preferably range from <0.1 to 0.2 mm. It is most preferred that both gaps be 0.1 mm or less.

While preferred embodiments of the invention have been described, it should be understood that the invention is not so limited, and modifications may be made without departing from the invention. The scope of the invention is defined by the appended claims, and all devices that come within the meaning of the claims, either literally or by equivalence, are intended to be embraced therein. Furthermore, the advantages described above are not necessarily the only advantages of the invention, and it is not necessarily expected that all of the described advantages will be achieved with every embodiment of the invention.

## Claims

1. A string trimmer head comprising:
a cylindrical housing having top and bottom ends;
a spool enclosed within the housing, the spool being movable a maximum compressing distance between an operating position and a compressed position;
a spring operatively connected with the spool;
a lid connected to the bottom end of the housing, the lid comprising an outer surface; and
a bump knob comprising a base and an intermediate member, wherein the intermediate member comprises top and bottom sides;
wherein the base is located inside the housing and the bottom side of the intermediate member extends outside the housing through the lid; and
wherein the bottom side of the intermediate member maintains a distance farther away from the spool than the outer surface of the lid during operation and compression of the string trimmer head.

2. The string trimmer head of claim 1 wherein the intermediate member comprises an external segment that is outside the housing when the string trimmer head is in the operating position, the external segment having a height that is greater than the maximum compressing distance.

3. The string trimmer head of claim 1 or 2 wherein the lid comprises an annulus surrounding the base, the annulus having a height which is greater than the maximum compressing distance.

4. The string trimmer head of any preceding claim wherein the bump knob further comprises at least one finger slot positioned outside the housing on an outer circumference of the bump knob, the finger slot comprising an outer edge and a recessed portion, wherein the outer edge is positioned at a distance farther away from the spool than the recessed portion of the finger slot.

5. The string trimmer head of claim 4 wherein at least one gap formed between: (1) the lid and the intermediate member or (2) the annulus and the base is 0.2 mm or less.

6. A string trimmer head comprising:
a cylindrical housing comprising top and bottom ends;
a spool enclosed within the housing, the spool being movable a maximum compressing distance between an operating position and a compressed position;
a spring operatively connected with the spool;
a lid connected to the bottom end of the housing; and
a bump knob comprising a base, wherein the base is located inside the housing in both the operating and compressed positions;
wherein the lid comprises an annulus surrounding the base, the annulus having a height which is greater than the maximum compressing distance.

7. The string trimmer head of claim 6 wherein the base comprises top and bottom sides and the annulus comprises a top edge, wherein the bottom side maintains a position below the top edge of the annulus in both the operating and compressed positions.

8. The string trimmer head of claim 6 or 7 wherein the bump knob further comprises at least one finger slot positioned outside the housing on an outer circumference of the bump knob, the finger slot comprising an outer edge and a recessed portion, wherein the outer edge has a bottom side that is positioned at a distance farther away from the spool than the recessed portion of the finger slot.

9. The string trimmer head of any one of claims 6 to 8 wherein a gap is formed between the annulus and the base is about 0.2 mm or less.

10. A string trimmer head comprising:
a cylindrical housing having top and bottom ends;
a spool enclosed within the housing;
a spring operatively connected with the spool;
a lid connected to the bottom end of the housing, the lid comprising an outer surface; and
a bump knob comprising at feast one finger slot positioned outside the housing on an outer circumference of the bump knob, the finger slot comprising an outer edge and a recessed portion, wherein the outer edge has a bottom side that is positioned at a distance farther away from the spool than the recessed portion of the finger slot.

11. A string trimmer head comprising:
a cylindrical housing having top and bottom ends;
a spool enclosed within the housing, the spool being movable a maximum compressing distance between an operating position and a compressed position;
a spring operatively connected with the spool;
a lid connected to the bottom end of the housing, the lid comprising an outer surface; and
a bump knob comprising a base and an intermediate member, wherein the base is located inside the housing and the intermediate member extends outside the housing through the lid in both the operating and compressed positions;
wherein the intermediate member comprises an external segment that is outside the housing when the string trimmer head is in the operating position, the external segment having a height that is greater than the maximum compressing distance;
wherein the lid comprises an annulus which surrounds the base of the bump knob, the annulus having a height which is greater than the maximum compressing distance; and
wherein the bump knob further comprises at least one finger slot positioned outside the housing on an outer circumference of the bump knob, the finger slot comprising an outer edge and a recessed portion, wherein the outer edge is positioned at a radial distance farther away from a central axis of the spool than the recessed portion; and
wherein the outer edge comprises a bottom side, the bottom side of the outer edge positioned at a distance farther away from the spool than the recessed portion in both the operating and compressed positions.

12. The string trimmer head of claim 11 wherein at least one gap formed between: (1) the lid and the intermediate member or (2) the annulus and the base is 0.2 mm or less.

13. A method of preventing debris from entering a housing of a string trimmer head, the method comprising:
operating a string trimmer with the string trimmer head in an operating position, the string trimmer head comprising:
the housing having top and bottom ends;
a spool enclosed within the housing, the spool being movable a maximum compressing distance between the operating position and a compressed position;
a spring operatively connected with the spool;
a lid connected to the bottom end of the housing, the lid comprising an outer surface; and
a bump knob comprising a base and an intermediate member, wherein the base is located inside the housing; and
wherein the intermediate member comprises top and bottom sides, wherein the bottom side extends outside the housing through the lid;
pressing the bump knob against a surface, thereby moving the bump knob and the spool into the compressed position, and wherein the bottom side of the intermediate member maintains a distance farther away from the spool than the outer surface of the lid.

14. The method of claim 13 wherein the lid comprises an annulus surrounding the base, the annulus having a height which is greater than the maximum compressing distance.

15. The method of claim 13 or 14 wherein the bump knob further comprises at least one finger slot positioned outside the housing on an outer circumference of the bump knob, the finger slot comprising an outer edge and a recessed portion, wherein the outer edge has a bottom side that is positioned at a distance farther away from the spool than the recessed portion of the finger slot.

16. The method of claim 15 wherein the outer edge of the bump knob is positioned at a radial distance farther away from a central axis of the spool than the recessed portion.

17. The method of claim 14 wherein at least one gap formed between: (1) the lid and the intermediate member or (2) the annulus and the base is 0.2 mm or less.
